Europäisches Patentamt

(19) European Patent Office

Office européen des brevets

(11) Publication number: **0 311 176 B1**

(12) **EUROPEAN PATENT SPECIFICATION**

(45) Date of publication of patent specification:
**10.07.91 Bulletin 91/28**

(51) Int. Cl.⁵: **G01F 1/704, G01P 5/18**

(21) Application number: **88202097.7**

(22) Date of filing: **26.09.88**

(54) **Optical flow meter.**

(30) Priority: **28.09.87 GB 8722744**

(43) Date of publication of application:
**12.04.89 Bulletin 89/15**

(45) Publication of the grant of the patent:
**10.07.91 Bulletin 91/28**

(84) Designated Contracting States:
**DE FR GB IT NL**

(56) References cited:
**DD-A- 203 140**
**GB-A- 2 057 141**
**US-A- 3 941 477**
**US-A- 4 429 995**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Cole, John Bernard
Thornton Research Center Pool Lane 1
Ince(nr. Chester) (GB)**

(74) Representative: **Aalbers, Onno et al
P.O. Box 302
NL-2501 CH The Hague (NL)**

**Description**

The invention relates to a method and apparatus for measuring the volume flow of fluid in a pipe.

In particular, the invention relates to optical flow measurement. Optical flow measurement, almost invariably with gas lasers and Doppler difference configuration, is established as a known technique of making measurements of fluid velocity at a point.

However, this technique has made no headway towards replacing existing meters such as mechanical turbine and positive displacement meters which are in common use to measure integrated volume flows.

One of the reasons is the lack of optical transmission in black oils and multiphase flows. Further, for single phase flows of gases and white products there exist problems of mechanical vulnerability and ignition hazard associated with gas lasers, and the expense of precision optics required for what is, in effect, an interferometric method.

Therefore, it is an object of the invention to provide a method and apparatus for optical flow measurement which is not interferometric and therefore more tolerant of the imperfections of low-cost optical components.

It is another object of the invention to provide an apparatus for optical flow measurement which has no moving parts, does not obstruct the flow in any way, and is capable of measuring flows which vary over a wide range and oscillate or reverse.

The invention therefore provides a method for measuring the volume flow of fluid in a pipe, comprising the steps of illuminating scattering particles suspended in the fluid, imaging the scattered light onto a multi-element photodetector, calculating a time-delayed spatial correlation function of the detected signals and deriving therefrom the magnitude and direction of the flow velocity at one or more points of the pipe.

The invention also provides an apparatus for measuring the volume flow of fluid in a pipe, comprising means for illuminating scattering particles suspended in the fluid, a multi-element photodetector, means for imaging the scattered light on to said multi-element photo-detector, means arranged to calculate a time-delayed spatial correlation function of the detected signals and to derive therefrom the magnitude and direction of the flow velocity at one or more points of the pipe.

Like all laser flow measurements, the invention requires scattering centres to be present in the fluid and to be carried along by the flow.

The concentration of water droplets and particulates in bulk products is more than sufficient.

The invention will now be described by way of example in more detail with reference to the accompanying drawings, in which :

Fig. 1 represents a sectional view of the mechanical construction of the apparatus of the invention ;

Fig. 2 represents schematically a scheme of the signal processing electronics of the invention ;

Fig. 3 represents a typical binary sequence read by the microprocessor applied in the apparatus of the invention ; and

Fig. 4 represents a measured temporal-spatial correlation function obtained by the method of the invention.

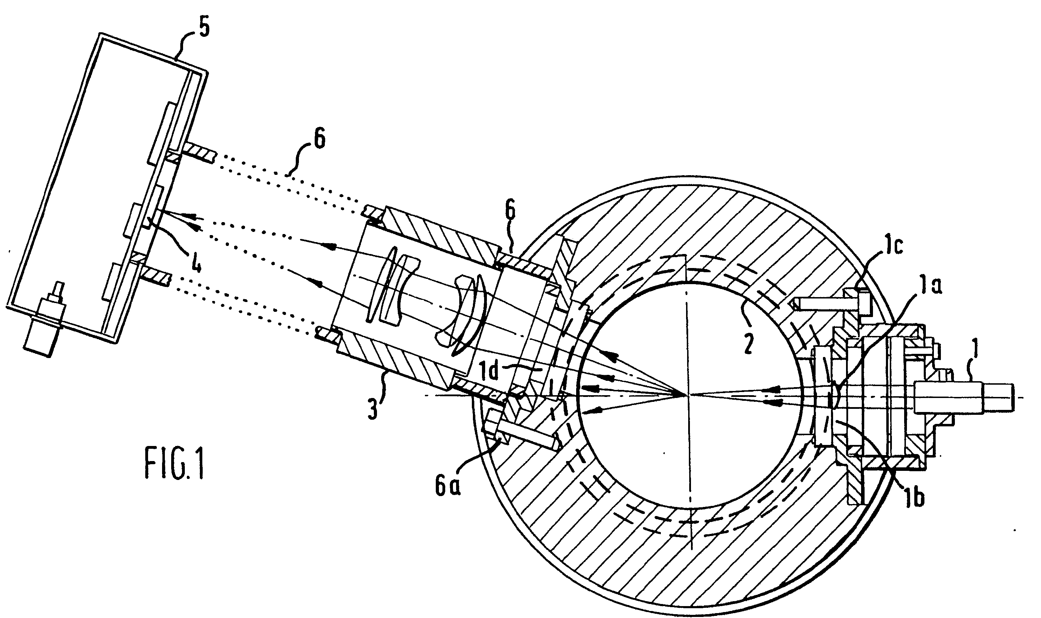

Referring now to fig. 1 a light source 1 (e.g. a semiconductor diode laser with a wavelength of 800 nm and a power of 1 mW) illuminates scattering particles in the fluid flowing in the pipe 2 through a cylindrical lens 1a and a window 1b. The window 1b is secured by means of a window clamp 1c. A lens 3 images the scattered light onto a multi-element photodetector 4 in signal processing electronics 5. A digital processor interfaced to the detector calculates a time-delayed spatial correlation function and hence the magnitude and direction of the flow velocity at one or more points of the pipe. Reference numeral 6 represents an extension tube to connect the lens 3 to the pipe 2 and to the signal processing electronics 5. Further, a clamp 6a and an output window 1d have been represented.

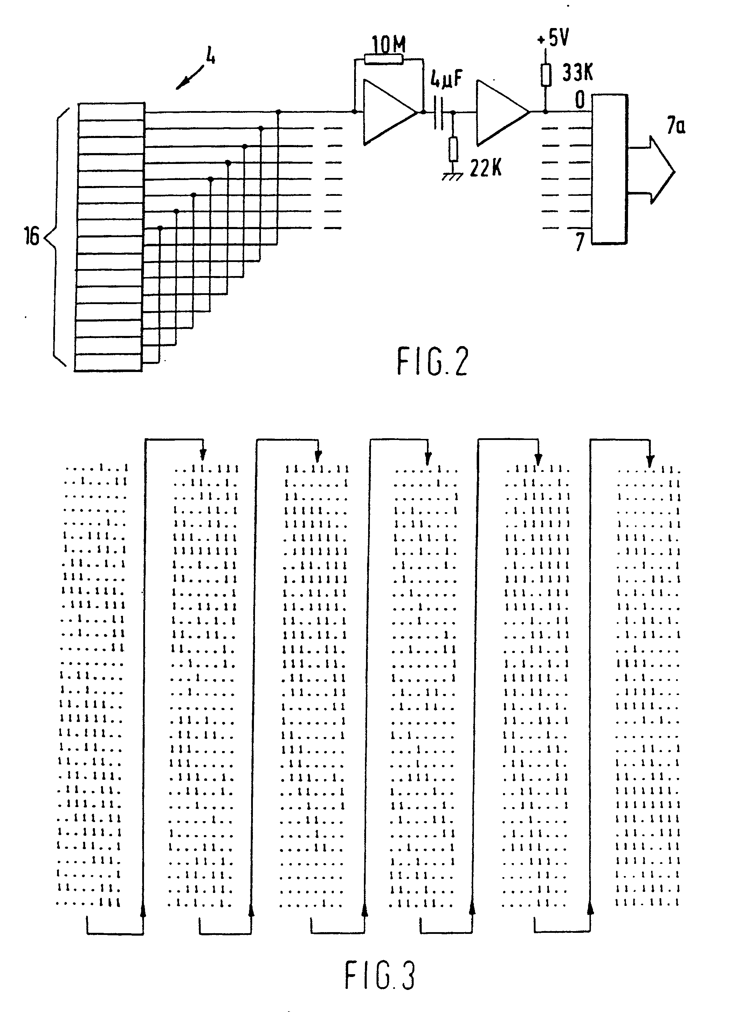

In Fig. 2 the multi-element photodiode array 4 is shown. On this multi-element array are imaged scattering particles in the flow to be measured, which are illuminated by the light source (not shown for reasons of clarity). In this figure 16 elements are linked in pairs and connected via any suitable a.c. coupled amplified and comparator circuits (only one of which has been represented for reasons of clarity) to a 8-bit digital input part 7a of a microprocessor.

The object of the measurement is to determine the rate and direction of movement of random images across the detector plane in the presence of noise. To do this, the processor runs a program to accumulate a cross-correlation function of the signals in time and space within its memory. The nature of the correlation function is best understood by reference to fig. 3.

The eight-bit byte generated by the comparators is read at equal intervals of time, as closely spaced as possible. In the experimental system, the sample interval is 170 µs, determined by the time taken to execute a loop in the machine code program. Fig. 3 lists 192 consecutive samples, with a high state from the corresponding comparator shown as '1' and a low state as '.'. The pattern of states at any particular bit position in successive bytes is random, due to noise in the associated detector element and amplifier, but with an increased probability of a '1' when the element is illuminated by light from a scattering centre in the liquid. If Fig. 3 is now viewed as a whole, a slanting structure is discernible in the bit patterns, which is indicative of the liquid motion. It is this statistical information that the processor code seeks to extract.

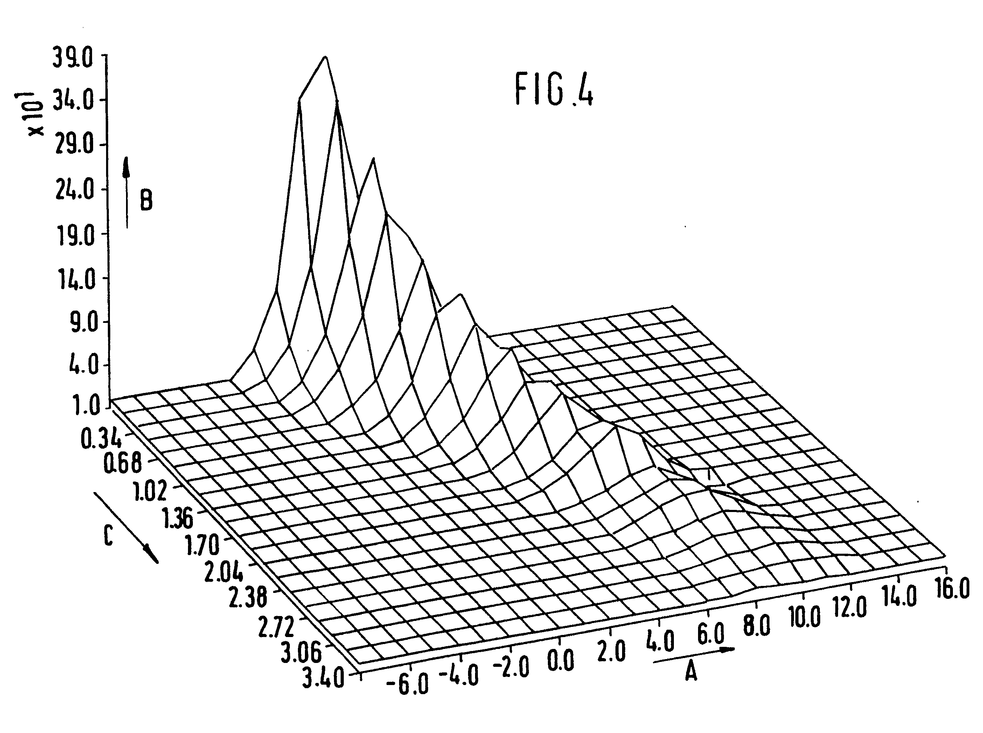

Fig. 4 is a three-dimensional plot of a correlation function computed from such data. It indicates the probability that, following the occurrence of a '1' at some bit position at some time, a second '1' will be observed at some later time in either the same position or a position displaced by a certain number of units. The axis A represents the displacement in elements ; the axis B represents the correlation in arbitrary units and the axis C represents the time difference in milliseconds. As usual with correlation functions, the time axis does not indicate the duration of the experiment (which was several seconds) but the time-difference between events. Likewise, the horizontal axis relates (via the spacing of the detector elements) to linear displacements in the detector plane and not to specific positions on the detector. Clearly, the correlation is strongest at zero time-difference and decreases with increasing time-difference. More importantly, however, the slanting trend in Fig. 3 is now visible as a ridge of correlation in which the mean displacement observed for each time difference is in direct proportion to the time difference. The ratio of each mean displacement to the corresponding time difference is, in magnitude and sign, the component of mean velocity of images in the detector plane resolved in the direction perpendicular to the parallel boundaries separating the elements. Since the element separation and the lens magnification are known constants, the magnitude and direction of the corresponding component of mean velocity of scatterers in the conjugate plane within the fluid can be determined. The optical system is so focussed and the detector array is so oriented that the velocity measured is the mean axial velocity at the centre of the pipe, which is related to the total flow in the pipe by various well known theoretical and empirical relations.

The function plotted in Fig. 4 is :

$$K(n,m) = \sum_{j=0}^{7} \sum_{k=1}^{\infty} D(j,k)\, D(j+n,\ k+m) \qquad (1)$$

in which D(j,k) is the value of the binary digit in the jth position observed during the kth time interval. Since an eight-bit processor is applied, displacements are limited to $\pm 7$ units. However, the interconnection of the detector elements in Fig. 1 is such that spatial displacements of up to $\pm 15$ element spacings are physically meaningful. This is taken into account by the convention :

$$D(j,k) \equiv D(j \bmod 8, k) \qquad (2)$$

For clarity, the cyclic ambiguity in j has been artificially removed in Fig. 4 when the displacement exceeds 7 elements. A related effect, which has not been removed, is a systematic change of weighting with displacement. With 16 detector elements, events involving a displacement n are generated by (16-n) possible pairs of elements. In Fig. 4, this artifact accentuates but does not cause the decay of the correlation with time-difference, which is predominantly caused by turbulence. Since D (j, k) takes only the values 0 and 1, the multiplication in (1) can be interpreted simply as an AND function, allowing rapid computation in real time. The resulting K (n, m) is then a convenient, though imperfect, approximation to the true temporal-spatial correlation function of the light intensity in the detector plane :

$$C(x,z) = \frac{\iint_{-\infty}^{\infty} I(x',t)\, I(x'+x,\ t+z)\, dx'\, dt}{\iint_{-\infty}^{\infty} [I(x',t)]^2\, dx'\, dt} \qquad (3)$$

in which z is time difference and x is linear displacement along the detector. C (x, z) is related to the required mean velocity component :

$$\bar{V} = \frac{\int_{-\infty}^{\infty} x\, C(x,z)\, dx}{z \int_{-\infty}^{\infty} C(x,z)\, dx} \qquad (4)$$

In the interests of rapid calculation, the full surface shown in Fig. 4 does not need to be computed for the purpose of a simple flow measurement. After making a preliminary measurement to ascertain the direction and approximate velocity of the flow, the processor software selects a suitable time-difference to eliminate the ambiguity arising from (2). It then accumulates a purely spatial correlation function for this value. In Fig. 4, this corresponds to the intersection of the surface with a vertical plane perpendicular to the time axis. From the observed distribution, it is a simple matter to calculate the average displacement occurring in the known time, the average velocity of the turbulent flow at the measurement position, using a suitable numerical approximation to Equation (4).

An interesting insight is obtained if the present technique is compared with a different and widely used technique of flow measurement, in which two points in the flow are illuminated by laser beams and the temporal cross-correlation function is measured. In Fig. 4, this corresponds to the intersection of the surface with a vertical plane parallel to the time axis. The shape of the surface is such that the peak of the measured function does not correspond exactly to the top of the ridge, indicating a systematic bias for turbulent flow.

In particular, Fig. 4 shows the performance of the method of the invention when measuring the flow of kerosene in a 3-inch pipe. The flow rate is 5.5 litres/s.

It will be appreciated that any multi-element photo-diode array and microprocessor suitable for the purpose can be applied.

It will further be appreciated that the apparatus of the invention could comprise any suitable modification dependent on the nature of the fluid flow to be measured.

For example, modifications required to measure gas flows by the method of the invention stem from the fact that the scattered light intensities to be expected from a gas are much weaker than those from even very clean liquid products, such as aviation kerosine. Thus, the optical system of the invention could be modified to collect light scattered into a solid angle centred on the forward direction, where the scattering for spherical particles is greatest.

In order to prevent the detector to be flooded with direct laser light the cylindrical lens 1a could focus the beam not (as shown in fig. 1) at the measurement in the middle of the pipe, but onto a rectangular beam stop at the output window of the apparatus of the invention.

Further, in measuring gas flows, the flow could be seeded with a fine mist of oil (for example approximately 0.1 parts per million by volume of odourless kerosine in the form of approximately one micrometer diameter droplets from a commercial lubicator unit.

Various modifications of the present invention will become apparent to those skilled in the art from the foregoing description and accompanying drawing. Such modifications are intended to fall within the scope of the appended claims.

## Claims

1. A method of measuring the volume flow of fluid in a pipe, comprising the steps of illuminating scattering particles suspended in the fluid, imaging the scattered light onto a multi-element photodetector, calculating a time-delayed spatial correlation function of the detected signals and deriving therefrom the magnitude and direction of the flow velocity at one or more points of the pipe.

2. The method as claimed in claim 1 comprising the step of plotting the said correlation functions.

3. An apparatus for measuring the volume flow of fluid in a pipe, comprising means for illuminating scattering particles suspended in the fluid, a multi-element photodetector, means for imaging the scattered light on to said multi-element photo-detector, and means arranged to calculate a time-delayed spatial correlation function of the detected signals and to derive therefrom the magnitude and direction of the flow velocity at one or more points of the pipe.

4. The apparatus as claimed in claim 3 wherein the illuminating means is a semiconductor diode laser.

5. The apparatus as claimed in claims 3 or 4 wherein the imaging means is a lens.

6. The apparatus as claimed in any one of claims 3-5 comprising means for plotting the said correlation functions.

## Ansprüche

1. Verfahren zum Messen der Volumenströmung eines Fluids in einer Leitung mit folgenden Schritten : Beleuchtung von Streu-Teilchen, die in dem Fluid suspendiert sind, Abbildung des gestreuten Lichtes auf einen mehrere Elemente aufweisenden Photodetektor, Berechnung der zeitverzögerten räumlichen Korrelationsfunktion des detektierten Signals und Ableitung der Größe und Richtung der Strömungsgeschwindigkeit an einem oder mehreren Punkten der Leitung daraus.

2. Verfahren nach Anspruch 1, wobei ein Schritt der Aufzeichnung der genannten Korrelationsfunktionen vorgesehen ist.

3. Vorrichtung zum Messen der Volumenströmung eines Fluids in einer Leitung mit einer Einrichtung zum Beleuchten von Streu-Teilchen, die in dem Fluid suspendiert sind, einem mehrere Elemente aufweisenden Photodetektor, Einrichtungen zum Abbilden des gestreuten Lichtes auf den genannten, mehrere Elemente aufweisenden Photodetektor, und mit einer Einrichtung, die so ausgelegt ist, daß sie die zeitverzögerte räumliche Korrelationsfunktion des detektierten Signal berechnet und daraus die Größe und Richtung der Strömungsgeschwindigkeit an einer oder mehreren Stellen der Leitung ableitet.

4. Vorrichtung nach Anspruch 3, wobei die Beleuchtungseinrichtung einen Halbleiter-Diodenlaser aufweist.

5. Vorrichtung nach einem der Ansprüche 3 oder 4, wobei die Beleuchtungseinrichtung eine Linse aufweist.

6. Vorrichtung nach einem der Ansprüche 3 bis 5, mit Einrichtungen zum Aufzeichnen der genannten Korrelationsfunktionen.

**Revendications**

1. Un procédé pour mesurer le débit d'un fluide dans une canalisation, comprenant les étapes selon lesquelles on éclaire des particules diffusantes en suspension dans le fluide, on forme des images de la lumière diffusée sur un détecteur photo-électrique à éléments multiples, on calcule une fonction de corrélation spatiale différée des signaux détectés et on en déduit la valeur et la direction de la vitesse d'écoulement à un ou plusieurs points de la canalisation.

2. Un procédé selon la revendication 1, comprenant l'étape selon laquelle on représente graphiquement les fonctions de corrélation.

3. Un appareil pour mesurer le débit d'un fluide dans une canalisation, comprenant des moyens pour éclairer des particules diffusantes en suspension dans le fluide, un détecteur photo-électrique à éléments multiples, des moyens pour former des images de la lumière diffusée sur le détecteur photo-électrique à éléments multiples et des moyens prévus pour calculer une fonction de corrélation spatiale différée des signaux détectés et pour en déduire la valeur et la direction de la vitesse d'écoulement à un ou plusieurs points de la canalisation.

4. Un appareil selon la revendication 3, dans lequel les moyens d'éclairage consistent en un laser à diode semi-conductrice.

5. Un appareil selon les revendications 3 ou 4, dans lequel les moyens de formation d'images consistent en une lentille.

6. Un appareil selon l'une quelconque des revendications 3-5, comprenant des moyens pour représenter graphiquement des fonctions de corrélation.

FIG.1

EP 0 311 176 B1

FIG.2

FIG.3

FIG.4

EP 0 311 176 B1